# EUROPEAN PATENT APPLICATION

(11) **EP 4 480 568 A1**
(43) Date of publication of application: **25.12.2024**
(21) Application number: 23752968.0
(22) Date of filing: 13.02.2023
(51) Int. Cl.: B01D 53/14, C01B 32/50

(54) **METHOD FOR GENERATING CARBON DIOXIDE**

(30) Priority: 14.02.2022 JP 2022020715
(71) Applicant: Kobe Gakuin Educational Foundation, Kobe-shi, Hyogo 650-8586 (JP)
(72) Inventor: INAGAKI, Fuyuhiko, Kobe-shi, Hyogo 650-8586 (JP); MURAKAMI, Ryo, Kobe-shi, Hyogo 650-8586 (JP); OTSUKA, Risa, Kobe-shi, Hyogo 650-8586 (JP); UCHIDA, Ayaka, Kobe-shi, Hyogo 650-8586 (JP)
(74) Representative: Maiwald GmbH
(86) International application number: PCT/JP2023/004697
(87) International publication number: WO 2023/153506

(57) **Abstract**

The present invention aims to provide a method for generating carbon dioxide, for efficiently separating fixed carbon dioxide from amines that have absorbed and fixed carbon dioxide, without using energy such as heating and the like. The present invention relates to a method for efficiently generating carbon dioxide at ambient temperature under normal pressure, including adding a solvent to a carbon dioxide generating agent containing an optionally substituted N-C₇₋₁₄ aralkylcarbamic acid or a salt thereof, and/or an optionally substituted C₇₋₁₄ aralkylamine bicarbonate, or a hydrate thereof.

## Description

### [Technical Field]

The present invention relates to a method for releasing (generating) carbon dioxide at low energy from amines that have absorbed and fixed carbon dioxide.

### [Background Art]

Toward the realization of a decarbonized society, there is a demand for technology that efficiently recovers carbon dioxide (CO₂) from exhaust gases and the air. In general, amines are used as chemical absorbents for carbon dioxide. The method including absorbing carbon dioxide by using amines, releasing the carbon dioxide by heating, and concentrating the carbon dioxide is called the temperature swing method (Non Patent Literature 1). Since amines are hydrophilic substances and carbon dioxide is water-soluble, it has been common to use amines as an absorbent in the form of an aqueous solution. On the other hand, when an aqueous solution is used, energy is required to heat the water during heating and releasing, and thus the high energy required for separation has been considered problematic from the aspect of efficiency.

The present inventors recently found that carbon dioxide selectivity can be expressed by introducing a hydrophobic functional group into the vicinity of an amino group (Patent Literatures 1 to 3). This eliminates the need to use amines as an aqueous solution, whereby energy of water heating can be reduced.

Carbon dioxide release process using chemical absorbents after carbon dioxide fixation is currently becoming increasingly diversified, and the pressure swing method (Non Patent Literature 2), the light swing method (Non Patent Literature 3), the electric swing method (Patent Literature 4) and the like are known. However, all swing methods are common in that they use energy to release carbon dioxide, and there is an urgent need to reduce energy in order to improve the efficiency of the carbon dioxide release process.

### [Citation List]

### [Patent Literature]

[Patent Literature 1]
   JP-B-6607596
[Patent Literature 2]
   JP-B-6782961
[Patent Literature 3]
   JP-A-2019-127417
[Patent Literature 4]
   US patent application publication No. 2021/0387139

### [Non Patent Literature]

[Non Patent Literature 1]
   Mitsubishi Heavy Industries, LTD. Technical Review, Vol.47, No.1, pages 45-53 (2010)
[Non Patent Literature 2]
   Kagaku Kogaku Ronbunshu, vol.13, No.2, pages 139-144 (1987)
[Non Patent Literature 3]
   CO2 recovery by light·storage·supply technique (Tokyo Science University), October 2019 (https://www.tus.ac.jp/ura/seeds/pa/C1910.pdf)

### [Summary of Invention]

### [Technical Problem]

An object of the present invention is to provide a method for releasing (generating) carbon dioxide, which is absorbed and fixed in amines, under mild conditions while reducing the separation energy as much as possible.

### [Solution to Problem]

Under such circumstances, the present inventors have conducted intensive studies and found that, by adding a solvent to a carbon dioxide generating agent containing an amine that has absorbed and fixed carbon dioxide, particularly an optionally substituted N-C₇₋₁₄ aralkylcarbamic acid or a salt thereof, and/or an optionally substituted C₇₋₁₄ aralkylamine bicarbonate, or a hydrate thereof (hereinafter at times referred to as "the carbon dioxide generating agent of the present invention"), carbon dioxide can be efficiently released at ambient temperature without performing any physicochemical treatments such as pressure, heating, electric power, light irradiation, and the like, which resulted in the completion of the present invention.

That is, the present invention provides the following.
[1] A method for generating carbon dioxide at ambient temperature under normal pressure, comprising adding a solvent to a carbon dioxide generating agent comprising an optionally substituted N-C₇₋₁₄ aralkylcarbamic acid or a salt thereof, and/or an optionally substituted C₇₋₁₄ aralkylamine bicarbonate, or a hydrate thereof.
[2] The method of the above-mentioned [1], wherein the solvent is selected from the group consisting of water, halogenated hydrocarbons, alcohols, amides, ketones, ethers, aromatic hydrocarbons, and mixed solvents thereof.
[3] The method of the above-mentioned [1], wherein the solvent is halogenated hydrocarbon or alcohol.
[4] The method of any of the above-mentioned [1] to [3], wherein an amount of the solvent to be added is 0.1 mL to 50 L per 1 mol of the optionally substituted N-C₇₋₁₄ aralkylcarbamic acid or a salt thereof, and/or the optionally substituted C₇₋₁₄ aralkylamine bicarbonate, or a hydrate thereof.
[5] The method of any of the above-mentioned [1] to [4], wherein the carbon dioxide generating agent comprises a N-C₇₋₁₄ aralkylcarbamic acid or a salt thereof, and/or a C₇₋₁₄ aralkylamine bicarbonate, or a hydrate thereof, each of which is optionally substituted by a substituent(s) selected from the group consisting of a halogen atom, a nitro group, a cyano group, a C₁₋₄ alkyl group, a C₁₋₄ alkoxy group, a halo C₁₋₄ alkyl group, a halo C₁₋₄ alkoxy group, a C₁₋₄ alkylenedioxy group, a C₆₋₁₀ aryl group, a C₇₋₁₄ aralkyl group, and an aminomethyl group.
[6] The method of the above-mentioned [5], wherein the N-C₇₋₁₄ aralkylcarbamic acid or a salt thereof, and/or the C₇₋₁₄ aralkylamine bicarbonate, or a hydrate thereof are/is a N-aralkylcarbamic acid or a salt thereof, and/or an aralkylamine bicarbonate, or a hydrate thereof derived from an aralkylamine selected from the group consisting of benzylamine, 2-methylbenzylamine, 2-methoxybenzylamine, 4-methoxybenzylamine, piperonylamine, 2-chlorobenzylamine, 2,4-dichlorobenzylamine, 4-trifluoromethylbenzylamine, phenethylamine, 2-methoxyphenethylamine, 4-chlorophenethylamine, 2,4-dichlorophenethylamine, benzhydrylamine, 1,2,3,4-tetrahydro-1-naphthylamine, 1-(1-naphthyl)ethylamine, and 1,2-diphenylethylamine.
[7] The method of any of the above-mentioned [1] to [4], wherein the carbon dioxide generating agent comprises a benzylcarbamic acid or a salt thereof, and/or a benzylamine bicarbonate, or a hydrate thereof, each of which is optionally substituted by a substituent(s) selected from the group consisting of a halogen atom, a C₁₋₄ alkyl group, a C₁₋₄ alkoxy group, a halo C₁₋₄ alkyl group, and a halo C₁₋₄ alkoxy group.

### [Advantageous Effects of Invention]

According to the present invention, a convenient method for efficiently releasing carbon dioxide at ambient temperature under normal pressure can be provided, which only includes adding a solvent to a carbon dioxide generating agent containing an amine that has absorbed and fixed carbon dioxide, particularly an optionally substituted N-C₇₋₁₄ aralkylcarbamic acid or a salt thereof, and/or an optionally substituted C₇₋₁₄ aralkylamine bicarbonate, or a hydrate thereof, without performing any physicochemical treatments such as pressure, heating, electric power, light irradiation, and the like. Since the present invention does not use an external energy (heating, pressurization, voltage application, light irradiation, stirring, etc.) at all, it is a novel, environmentally friendly method for generating carbon dioxide that can reduce separation energy to substantially zero.

### [Brief Description of Drawings]

[Fig. 1]

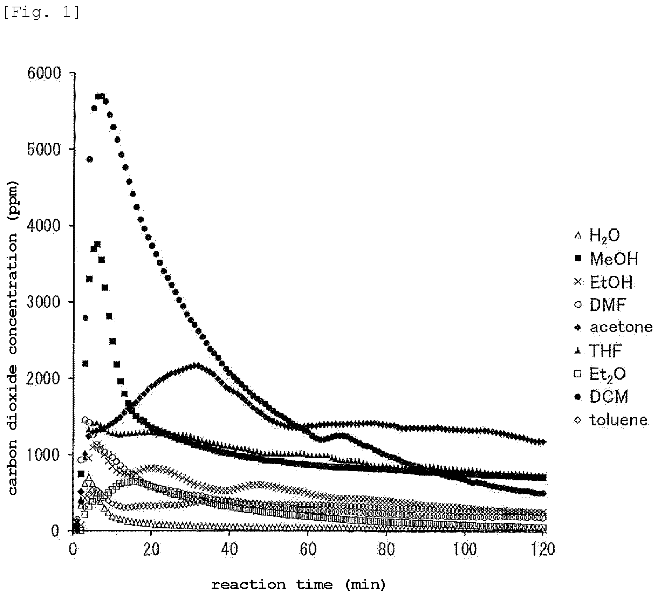

   Fig. 1 shows changes in carbon dioxide release concentration (ppm) over time when various solvents (water (H₂O), methanol (MeOH), ethanol (EtOH), N,N-dimethylformamide (DMF), acetone, tetrahydrofuran (THF), diethyl ether (Et₂O), dichloromethane (DCM) or toluene) are added to a hydrate of N-benzylcarbamic acid or a salt thereof, and/or benzylamine bicarbonate at ambient temperature under normal pressure.
[Fig. 2]

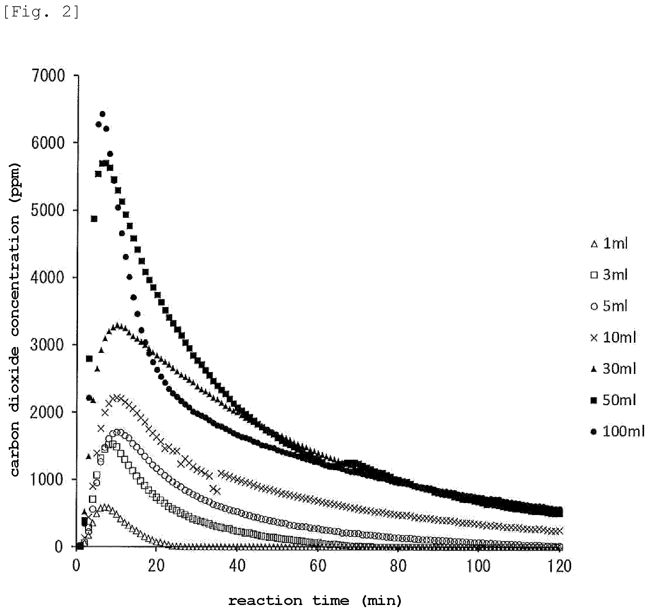

   Fig. 2 shows changes in carbon dioxide release concentration (ppm) over time when different volumes of dichloromethane (1 mL, 3 mL, 5 mL, 10 mL, 30 mL, 50 mL, or 100 mL) are respectively added to a hydrate of N-benzylcarbamic acid or a salt thereof, and/or benzylamine bicarbonate at ambient temperature under normal pressure.
[Fig. 3]

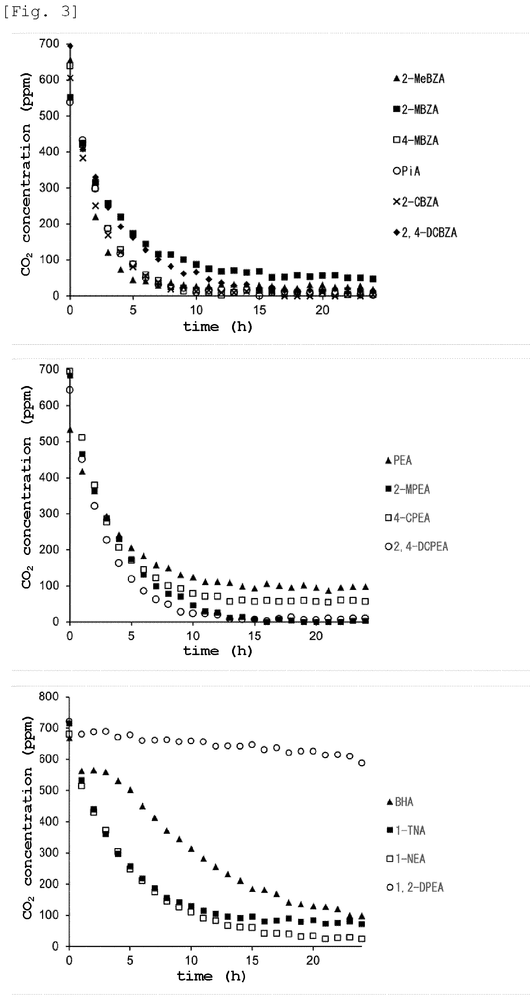

   Fig. 3 shows changes over time in the carbon dioxide concentration inside a desiccator after various aralkylamines (5 mmol) added to petri dishes were placed in the desiccator adjusted to an initial carbon dioxide concentration of about 600 to 700 ppm and the door was closed.
[Fig. 4]

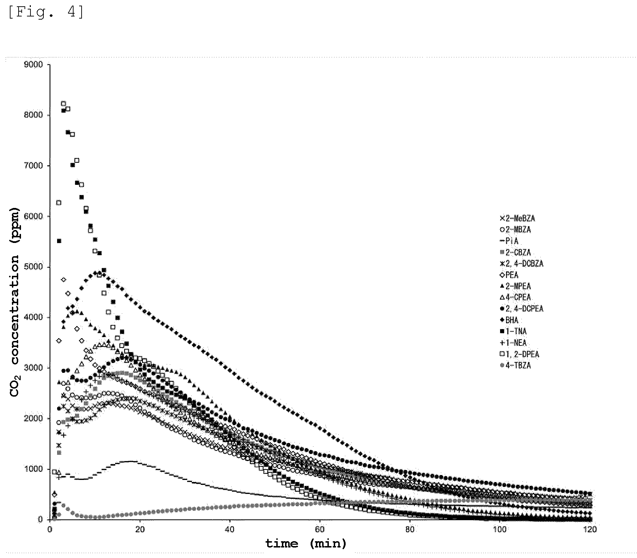

   Fig. 4 shows changes over time in carbon dioxide release concentration (ppm) when dichloromethane (DCM) was added to a hydrate of various N-aralkylcarbamic acids or a salt thereof, and/or aralkylamine bicarbonate at ambient temperature under normal pressure.

### [Description of Embodiments]

The present invention is described in detail in the following.

### (Definition)

In the present specification, the "halogen atom" is a fluorine atom, a chlorine atom, a bromine atom, or an iodine atom.

In the present specification, the "alkyl (group)" is, for example, a linear or branched alkyl group having one or more carbon atoms. When the carbon number range is not particularly limited, it is preferably a C₁₋₁₀ alkyl group, more preferably a C₁₋₆ alkyl group, particularly preferably a C₁₋₄ alkyl group. Specific preferable examples when the carbon number range is not particularly limited include methyl, ethyl, propyl, isopropyl, butyl, isobutyl, sec-butyl, tert-butyl, pentyl, hexyl, and the like.

In the present specification, the "haloalkyl (group)" means a group in which one or more hydrogen atoms in the aforementioned alkyl group have been substituted with halogen. Specifically, for example, difluoromethyl, trifluoromethyl, 2-chloroethyl, 2-bromoethyl, 2-iodoethyl, 2-fluoroethyl, 2,2-difluoroethyl, 2,2,2-trifluoroethyl, pentafluoroethyl, 2,2,3,3-tetrafluoropropyl, 3,3,3-trifluoropropyl, 4,4,4-trifluorobutyl, 5,5,5-trifluoropentyl, 6,6,6-trifluorohexyl, and the like can be mentioned. Among them, "halo C₁₋₆ alkyl" is preferred and "halo C₁₋₄ alkyl" is more preferred.

In the present specification, as the "alkoxy (group)", an alkoxy group having one or more carbon atoms can be mentioned. When the carbon number range is not particularly limited, it is preferably a C₁₋₁₀ alkoxy group, more preferably a C₁₋₆ alkoxy group. Specific preferable examples when the carbon number range is not limited include methoxy, ethoxy, propoxy, isopropoxy, butoxy, isobutoxy, sec-butoxy, tert-butoxy, pentyloxy, hexyloxy, and the like.

In the present specification, the "haloalkoxy (group)" means a group in which one or more hydrogen atoms in the aforementioned alkoxy group have been substituted with halogen. Specifically, for example, difluoromethoxy, trifluoromethoxy, 2-chloroethoxy, 2-bromoethoxy, 2-iodoethoxy, 2-fluoroethoxy, 2,2-difluoroethoxy, 2,2,2-trifluoroethoxy, pentafluoroethoxy, 2,2,3,3-tetrafluoropropoxy, 3,3,3-trifluoropropoxy, 4,4,4-trifluorobutoxy, 5,5,5-trifluoropentyloxy, 6,6,6-trifluorohexyloxy, and the like can be mentioned. Among them, "halo C₁₋₆ alkoxy" is preferred and "halo C₁₋₄ alkoxy" is more preferred.

In the present specification, the "aryl (group)" means a monovalent monocyclic or polycyclic hydrocarbon group that exhibits aromaticity. Specifically, for example, a C₆₋₁₄ aryl group such as phenyl, 1-naphthyl, 2-naphthyl, biphenylyl, 2-anthryl, and the like, and the like can be mentioned. Among them, a C₆₋₁₀ aryl group is more preferred and phenyl is particularly preferred.

In the present specification, the "aralkyl (group)" means a group in which the aforementioned aryl group is bonded to the aforementioned alkyl group. Specifically, for example, a C₇₋₂₀ aralkyl group can be mentioned, preferably a C₇₋₁₄ aralkyl group (C₆₋₁₀ aryl-C₁₋₄ alkyl group) . Specific preferable examples include benzyl, 1-phenylethyl, 2-phenylethyl, 1-phenylpropyl, naphthylmethyl, 1-naphthylethyl, 1-naphthylpropyl, and the like, and benzyl is particularly preferred.

In the present specification, the "aryloxy (group)" means a group in which the aforementioned aryl group is bonded to an oxygen atom. Specifically, for example, phenyloxy, 1-naphthyloxy, 2-naphthyloxy, biphenylyloxy, 2-anthryloxy, and the like can be mentioned. Among them, a C₆₋₁₄ aryloxy group is preferred, and a phenyloxy group is particularly preferred.

In the present specification, the "aralkyloxy (group)" means a group in which the aforementioned aralkyl group is bonded to an oxygen atom. Specifically, for example, benzyloxy, phenethyloxy, naphthylmethyloxy, biphenylylmethyloxy, and the like can be mentioned. Among them, a C₇₋₁₄ aralkyloxy group is preferred, and a benzyloxy group is particularly preferred.

In the present specification, as the "alkenyl (group)", a linear or branched C₂₋₆ alkenyl group and the like are preferred. For example, vinyl, 1-propenyl, allyl, isopropenyl, butenyl, isobutenyl, and the like can be mentioned. Among them, a C₂₋₄ alkenyl group is preferred.

In the present specification, as the "alkynyl (group)", a C₂₋₆ alkynyl group and the like are preferred. For example, ethynyl, 1-propynyl, 2-propynyl, 1-butynyl, 2-butynyl, 3-butynyl, 1-pentynyl, 2-pentynyl, 3-pentynyl, 4-pentynyl, 1-hexynyl, 2-hexynyl, 3-hexynyl, 4-hexynyl, 5-hexynyl, and the like can be mentioned. Among them, a C₂₋₄ alkynyl group is preferred.

In the present specification, the "cycloalkyl (group)" means a cyclic alkyl group. For example, cyclopropyl, cyclobutyl, cyclopentyl, cyclohexyl, cycloheptyl, cyclooctyl, and the like can be mentioned. Among them, a C₃₋₆ cycloalkyl group such as cyclopropyl, cyclobutyl, cyclopentyl, cyclohexyl, or the like is preferred.

In the present specification, the "acyl(group)" means an alkanoyl group or an aroyl group. While the carbon number range is not particularly limited, it is preferably a C₁₋₇ alkanoyl group or C₇₋₁₁ aroyl.

In the present specification, the "C₁₋₇ alkanoyl (group)" is a formyl group or linear or branched alkylcarbonyl having 2 to 7 carbon atoms (that is, C₁₋₆ alkyl-carbonyl group). For example, formyl, acetyl, propionyl, butyryl, isobutyryl, pentanoyl, tert-butylcarbonyl(pivaloyl), hexanoyl, heptanoyl, and the like can be mentioned. Among them, a C₁₋₅ alkanoyl group (that is, C₁₋₄ alkyl-carbonyl group) is preferred.

In the present specification, the "C₇₋₁₁ aroyl (group)" is arylcarbonyl having 7 to 11 carbon atoms (that is, C₆₋₁₀ arylcarbonyl), and benzoyl, 1-naphthoyl, 2-naphthoyl, and the like can be mentioned. Among them, benzoyl is preferred.

In the present specification, the "acyloxy(group)" means a group in which the aforementioned alkanoyl group or aroyl group is bonded to an oxygen atom. It is preferably a C₁₋₅ alkanoyloxy group or a C₇₋₁₁ aroyloxy group.

In the present specification, examples of the "C₁₋₅ alkanoyloxy (group)" include formyloxy, acetoxy, ethylcarbonyloxy, propylcarbonyloxy, isopropylcarbonyloxy, butylcarbonyloxy, isobutylcarbonyloxy, sec-butylcarbonyloxy, tert-butylcarbonyloxy(pivaloyloxy), and the like, preferably acetoxy.

In the present specification, examples of the "C₇₋₁₁ aroyloxy (group)" include benzoyloxy, 1-naphthoyloxy, 2-naphthoyloxy, and the like, preferably benzoyloxy.

In the present specification, the "alkoxy-carbonyl (group)" means a group in which the aforementioned alkoxy group is bonded to a carbonyl group. While the carbon number range is not particularly limited, it is preferably a C₁₋₆ alkoxy-carbonyl group, more preferably a C₁₋₄ alkoxy-carbonyl group.

In the present specification, the "amino C₁₋₆ alkyl (group)" means a group in which one hydrogen atom in the aforementioned C₁₋₆ alkyl group is substituted by an amino group. It is preferably an amino C₁₋₄ alkyl group, more preferably an aminomethyl group or 2-aminoethyl group.

In the present specification, the "hydroxy C₁₋₆ alkyl (group)" means a group in which one hydrogen atom in the aforementioned C₁₋₆ alkyl group is substituted by a hydroxy group. It is preferably a hydroxy C₁₋₄ alkyl group, more preferably a hydroxymethyl group or a 2-hydroxyethyl group.

In the present specification, the "N-C₇₋₁₄ aralkylcarbamic acid" means a compound in which one hydrogen atom of an amino group in C₇₋₁₄ aralkylamine is substituted by a carboxy group (-CO₂H). It is preferably N-benzylcarbamic acid or N-phenethylcarbamic acid, more preferably N-benzylcarbamic acid.

The "N-C₇₋₁₄ aralkylcarbamic acid" may form a salt with the corresponding C₇₋₁₄ aralkylamine. The salt of N-C₇₋₁₄ aralkylcarbamic acid is preferably N-benzylcarbamic acid benzylammonium salt (benzylammonium N-benzylcarbamate) or N-phenethylcarbamic acid phenethylammonium salt (phenethylammonium N-phenethylcarbamate), more preferably N-benzylcarbamic acid benzylammonium salt.

In the present specification, the "C₇₋₁₄ aralkylamine bicarbonate" means C₇₋₁₄ aralkylammonium bicarbonate (HCO₃⁻). The C₇₋₁₄ aralkylamine bicarbonate is produced by a reaction of C₇₋₁₄ aralkylamine and carbon dioxide in the presence of water (moisture).

In the present specification, the "N-C₇₋₁₄ aralkylcarbamic acid or a salt thereof, and/or C₇₋₁₄ aralkylamine bicarbonate, or a hydrate thereof" may be present in any form of N-C₇₋₁₄ aralkylcarbamic acid or a salt thereof, or C₇₋₁₄ aralkylamine bicarbonate, or a hydrate thereof, or may be present in the form of a mixture containing both N-C₇₋₁₄ aralkylcarbamic acid or a salt thereof (or a hydrate thereof) and C₇₋₁₄ aralkylamine bicarbonate (or a hydrate thereof) at any ratio.

In the present specification, being "optionally substituted" means unsubstituted or having one or more substituents. When having a substituent(s), the "substituent" includes, for example, (1) a halogen atom, (2) a hydroxy group, (3) a carboxy group, (4) a nitro group, (5) a cyano group, (6) a C₁₋₆ alkyl group, (7) a halo C₁₋₆ alkyl group, (8) a C₃₋₈ cycloalkyl group, (9) a C₁₋₆ alkoxy group, (10) a halo C₁₋₆ alkoxy group, (11) a C₁₋₆ alkoxy-carbonyl group, (12) a C₂₋₆ alkenyl group, (13) a C₂₋₆ alkynyl group, (14) an acyl group, (15) an acyloxy group, (16) a C₆₋₁₄ aryl group, (17) a C₆₋₁₄ aryloxy group, (18) a C₇₋₁₄ aralkyloxy group, (19) an amino C₁₋₆ alkyl group, (20) a hydroxy C₁₋₆ alkyl group, and the like. Among them, a halogen atom, a nitro group, a cyano group, a C₁₋₄ alkyl group, a C₁₋₄ alkoxy group, a halo C₁₋₄ alkyl group, a halo C₁₋₄ alkoxy group, an aminomethyl group, and the like are preferred. When having a plurality of substituents, each substituent may be the same or different.

The above-mentioned substituents are optionally further substituted by the above-mentioned substituents. The number of the substituents is not particularly limited as long as it is a substitutable number. When plural substituents are present, each substituent may be the same or different.

In the present specification, the "optionally substituted N-C₇₋₁₄ aralkylcarbamic acid or a salt thereof" and the "optionally substituted C₇₋₁₄ aralkylamine bicarbonate" means that one or more hydrogen atoms in the C₆₋₁₀ aryl group and/or the C₁₋₄ alkyl group constituting the C₇₋₁₄ aralkyl group in the aforementioned "N-C₇₋₁₄ aralkylcarbamic acid or a salt thereof" or "C₇₋₁₄ aralkylamine bicarbonate" is/are optionally substituted by the aforementioned substituents.

In the present specification, the hydrate of the "optionally substituted N-C₇₋₁₄ aralkylcarbamic acid or a salt thereof, and/or optionally substituted C₇₋₁₄ aralkylamine bicarbonate" means a compound in which both carbon dioxide and water molecule (moisture in air) are absorbed and fixed by the corresponding C₇₋₁₄ aralkylamine, when producing the aforementioned "optionally substituted N-C₇₋₁₄ aralkylcarbamic acid or a salt thereof, and/or optionally substituted C₇₋₁₄ aralkylamine bicarbonate".

In the present specification, the "ambient temperature" refers to the ambient temperature (15°C to 25°C) defined in the 16th Edition, the Japanese Pharmacopoeia General Rules.

In the present specification, the "normal pressure" generally means a pressure equivalent to atmospheric pressure.

### (The carbon dioxide generating agent of the present invention)

As the carbon dioxide generating agent of the present invention, optionally substituted N-C₇₋₁₄ aralkylcarbamic acid or a salt thereof, and/or optionally substituted C₇₋₁₄ aralkylamine bicarbonate per se can be used, and a composition containing them can also be used. The composition may contain only one kind of the optionally substituted N-C₇₋₁₄ aralkylcarbamic acid or a salt thereof, and/or optionally substituted C₇₋₁₄ aralkylamine bicarbonate or may contain two or more different kinds thereof.

Preferred embodiments of the carbon dioxide generating agent of the present invention are described in the following.

The carbon dioxide generating agent of the present invention is preferably a composition containing N-C₇₋₁₄ aralkylcarbamic acid or a salt thereof, and/or C₇₋₁₄ aralkylamine bicarbonate, or a hydrate thereof, each of which is optionally substituted by a substituent(s) selected from the group consisting of a halogen atom, a nitro group, a cyano group, a C₁₋₄ alkyl group, a C₁₋₄ alkoxy group, a halo C₁₋₄ alkyl group, a halo C₁₋₄ alkoxy group, a C₁₋₄ alkylenedioxy group, a C₆₋₁₀ aryl group, a C₇₋₁₄ aralkyl group, and an aminomethyl group. A specific, preferred example is, for example, a composition containing N-aralkylcarbamic acid or a salt thereof, and/or aralkylamine bicarbonate, or a hydrate thereof, each derived from aralkylamine selected from the group consisting of benzylamine, 2-methylbenzylamine, 2-methoxybenzylamine, 4-methoxybenzylamine, piperonylamine, 2-chlorobenzylamine, 2,4-dichlorobenzylamine, 4-trifluoromethylbenzylamine, phenethylamine, 2-methoxyphenethylamine, 4-chlorophenethylamine, 2,4-dichlorophenethylamine, benzhydrylamine, 1,2,3,4-tetrahydro-1-naphthylamine, 1-(1-naphthyl)ethylamine, and 1,2-diphenylethylamine.

As used herein, "N-aralkylcarbamic acid or a salt thereof, and/or aralkylamine bicarbonate, or a hydrate thereof, each derived from aralkylamine" means N-aralkylcarbamic acid or a salt thereof, and/or aralkylamine bicarbonate, or a hydrate thereof, formed when an aralkylamine absorbs carbon dioxide in the air.

The carbon dioxide generating agent of the present invention is more preferably N-C₇₋₁₄ aralkylcarbamic acid or a salt thereof, and/or C₇₋₁₄ aralkylamine bicarbonate, or a hydrate thereof per se, each of which is optionally substituted by a substituent(s) selected from the group consisting of a halogen atom, a nitro group, a cyano group, a C₁₋₄ alkyl group, a C₁₋₄ alkoxy group, a halo C₁₋₄ alkyl group, a halo C₁₋₄ alkoxy group, and an aminomethyl group, or a composition containing same, further preferably, N-benzylcarbamic acid or a salt thereof, and/or benzylamine bicarbonate, or a hydrate thereof per se, each of which is optionally substituted by a substituent(s) selected from the group consisting of a halogen atom, a nitro group, a cyano group, a C₁₋₄ alkyl group, a C₁₋₄ alkoxy group, a halo C₁₋₄ alkyl group, a halo C₁₋₄ alkoxy group, and an aminomethyl group; N-phenethylcarbamic acid or a salt thereof, and/or phenethylaminebicarbonate, or a hydrate thereof per se, each of which is optionally substituted by a substituent(s) selected from the group consisting of a halogen atom, a nitro group, a cyano group, a C₁₋₄ alkyl group, a C₁₋₄ alkoxy group, a halo C₁₋₄ alkyl group, a halo C₁₋₄ alkoxy group, and an aminomethyl group; or a composition containing same, further more preferably, N-benzylcarbamic acid or a salt thereof, and/or benzylamine bicarbonate, or a hydrate thereof per se, each of which is optionally substituted by a substituent(s) selected from the group consisting of a halogen atom, a nitro group, a cyano group, a C₁₋₄ alkyl group, a C₁₋₄ alkoxy group, a halo C₁₋₄ alkyl group, a halo C₁₋₄ alkoxy group, and an aminomethyl group, or a composition containing same, particularly preferably, N-benzylcarbamic acid or a salt thereof, and/or benzylamine bicarbonate (e.g., N-benzylcarbamic acid or a salt thereof, and/or benzylamine bicarbonate; N-4-methoxybenzylcarbamic acid or a salt thereof, and/or 4-methoxybenzylamine bicarbonate; N-4-trifluoromethylbenzylcarbamic acid or a salt thereof, and/or 4-trifluoromethylbenzylamine bicarbonate), or a hydrate thereof, each of which is optionally substituted by a substituent(s) selected from the group consisting of a halogen atom, a C₁₋₄ alkyl group, a C₁₋₄ alkoxy group, a halo C₁₋₄ alkyl group, and a halo C₁₋₄ alkoxy group, or a composition containing same.

The composition may contain additives such as desiccants (magnesium sulfate, molecular sieves, etc.), and the like for removing moisture, as necessary.

The content of the optionally substituted N-C₇₋₁₄ aralkylcarbamic acid or a salt thereof, and/or optionally substituted C₇₋₁₄ aralkylamine bicarbonate, or a hydrate thereof, in the carbon dioxide generating agent of the present invention is preferably not less than 80 wt%, more preferably not less than 90 wt%. The carbon dioxide generating agent consisting only of optionally substituted N-C₇₋₁₄ aralkylcarbamic acid or a salt thereof, and/or optionally substituted C₇₋₁₄ aralkylamine bicarbonate, or a hydrate thereof is particularly preferred.

### (Method of producing the carbon dioxide generating agent of the present invention)

The carbon dioxide generating agent of the present invention can be produced by allowing an optionally substituted C₇₋₁₄ aralkylamine (i.e., a carbon dioxide absorbent) to absorb and fix carbon dioxide.

The production method include leaving an optionally substituted C₇₋₁₄ aralkylamine under an air atmosphere or under a high-concentration carbon dioxide gas flow, thereby causing the optionally substituted C₇₋₁₄ aralkylamine to absorb and fix carbon dioxide, according to the Reference Examples described below and the method developed by the present inventors (e.g., the method described in Patent Literature 2 (JP-B-6782961) or Patent Literature 3 (JP-A-2019-127417)).

As the carbon dioxide absorbent of the present invention, an optionally substituted C₇₋₁₄ aralkylamine itself can be used, but a composition containing same can also be used. The composition may contain only one optionally substituted C₇₋₁₄ aralkylamine itself, or may contain two or more kinds of optionally substituted C₇₋₁₄ aralkylamine. Among them, those containing only one optionally substituted C₇₋₁₄ aralkylamine are preferred. The composition may contain additives such as desiccants (magnesium sulfate, molecular sieves, etc.), and the like for removing solvent and moisture, as necessary. From the aspect of carbon dioxide absorption capacity, the content of the optionally substituted C₇₋₁₄ aralkylamine in the carbon dioxide absorbent is preferably not less than 80 wt%, and those consisting only of the optionally substituted C₇₋₁₄ aralkylamine are particularly preferred.

As the optionally substituted C₇₋₁₄ aralkylamine, a commercially available product may be used as it is, or one produced by a method known per se may be used.

Specific examples of the optionally substituted C₇₋₁₄ aralkylamine include benzylamine, 2-methylbenzylamine, 4-methylbenzylamine, 4-trifluoromethylbenzylamine, 4-ethylbenzylamine, 2-methoxybenzylamine, 4-methoxybenzylamine, piperonylamine, 2-chlorobenzylamine, 4-chlorobenzylamine, 2,4-dichlorobenzylamine, 4-fluorobenzylamine, 4-trifluoromethylbenzylamine, phenethylamine, 4-methylphenethylamine, 4-ethylphenethylamine, 2-methoxyphenethylamine, 4-methoxyphenethylamine, 4-chlorophenethylamine, 2,4-dichlorophenethylamine, 4-fluorophenethylamine, 4-trifluoromethylphenethylamine, 3-phenylpropylamine, benzhydrylamine, 1,2,3,4-tetrahydro-1-naphthylamine, 1-(1-naphthyl)ethylamine, 1,2-diphenylethylamine, and the like. Among these, benzylamine, 2-methylbenzylamine, 2-methoxybenzylamine, 4-methoxybenzylamine, piperonylamine, 2-chlorobenzylamine, 2,4-dichlorobenzylamine, 4-trifluoromethylbenzylamine, phenethylamine, 2-methoxyphenethylamine, 4-chlorophenethylamine, 2,4-dichlorophenethylamine, benzhydrylamine, 1,2,3,4-tetrahydro-1-naphthylamine, 1-(1-naphthyl)ethylamine, and 1,2-diphenylethylamine are preferred because they have high carbon dioxide absorption capacity, and benzylamine, phenethylamine, 4-methoxybenzylamine, and 4-trifluoromethylbenzylamine are more preferred. These are all commercially available and readily available. In addition, these are less likely to absorb water (moisture in the air) when absorbing carbon dioxide, and are therefore also advantageous in that inclusion of water vapor can be reduced when generating carbon dioxide.

When the carbon dioxide generating agent of the present invention is produced in an air atmosphere, for example, a carbon dioxide densitometer and a petri dish are prepared in an openable and closable desiccator, and an optionally substituted C₇₋₁₄ aralkylamine, which is the carbon dioxide absorbent of the present invention, is added to the petri dish in the desiccator, the door is immediately closed, the desiccator is left standing for several hours to 7 days, and when the carbon dioxide concentration in the desiccator ceased to change, the completion of fixing of the carbon dioxide in the air to the carbon dioxide absorbent can be confirmed.

As the carbon dioxide absorbent of the present invention, either a liquid or a solid can be used, but from the aspect of absorption efficiency, it is preferable to use a liquid one.

### (Method of generating carbon dioxide using the carbon dioxide generating agent of the present invention)

The carbon dioxide generating agent of the present invention can generate carbon dioxide by adding a solvent at ambient temperature under normal pressure.

Specifically, carbon dioxide can be efficiently generated (released) by simply adding a solvent to a container containing the carbon dioxide generating agent of the present invention at ambient temperature and under normal pressure and leaving it to stand. The concentration of released carbon dioxide can be measured over time using a carbon dioxide densitometer installed on the outlet side while flowing nitrogen gas using a mass flow controller.

The solvent that can be used in the carbon dioxide generating method of the present invention is not particularly limited. Specifically, for example, a solvent selected from the group consisting of water; halogenated hydrocarbons such as dichloromethane, chloroform and the like; alcohols such as methanol, ethanol, isopropanol and the like; amides such as dimethylformamide, dimethylacetamide and the like; ketones such as acetone and the like; ethers such as diethyl ether, tert-butyl methyl ether, tetrahydrofuran and the like; aromatic hydrocarbons such as toluene, xylene and the like; and mixed solvents thereof can be mentioned. Among these, halogenated hydrocarbons such as dichloromethane and the like; or alcohols such as methanol, ethanol and the like are preferred, and dichloromethane is more preferred.

The amount of the solvent to be used may vary depending on the kind of carbon dioxide generating agent and solvent used. It is generally 0.1 mL to 50 L, preferably 1 mL to 25 L, per 1 mol of the optionally substituted N-C₇₋₁₄ aralkylcarbamic acid or a salt thereof, and/or optionally substituted C₇₋₁₄ aralkylamine bicarbonate, or a hydrate thereof.

According to the carbon dioxide generating method of the present invention, not less than 80% of the carbon dioxide fixed in the carbon dioxide generating agent can be released at ambient temperature under normal pressure simply by adding solvent to the carbon dioxide generating agent of the present invention, without performing any physicochemical treatments such as pressure, heating, electric power, light irradiation, and the like. Compared to conventional methods that require heating conditions at a high temperature of 900°C, and the like, this is an extremely mild method of generating carbon dioxide.

As described above, since the carbon dioxide generating method of the present invention does not use an external energy (heating, pressurization, voltage application, light irradiation, stirring, etc.) at all, it is a novel, environmentally friendly method for generating carbon dioxide that can reduce separation energy to substantially zero.

### [Example]

The present invention is explained more specifically in the following by referring to Reference Example and Examples, which do not limit the present invention, and the present invention may be modified without departing from the scope of the invention.

The melting point was measured using a melting point measuring instrument (Micro Melting Point Apparatus MP-J3) manufactured by Yanagimoto Seisakusho Co., Ltd.

Infrared absorption was measured using a Shimadzu FT/IR-8700 infrared spectrophotometer in a fixed NaCl plate cell in transmission through a chloroform solution, or using a Thermo Scientific Nicolet iS5 FT-IR spectrometer by the ATR method.

Elemental analysis was performed by using J-SCIENCE LAB JM10.

The concentration of carbon dioxide was measured using a carbon dioxide densitometer (GC-02) manufactured by God Ability (GA), which was installed on the outlet side while nitrogen gas was flowing using a mass flow controller (Fujikin, Inc.).

In the following examples, the ratios shown in the mixed solvents are volume ratios unless otherwise noted. The % shows % by weight unless otherwise specified.

As the optionally substituted C₇₋₁₄ aralkylamine which is the carbon dioxide absorbent used for the preparation of the carbon dioxide generating agent of the present invention, a commercially available product (benzylamine (manufactured by Nacalai Tesque Co., Ltd.)) was used as it was.

### [Reference Example 1]

### Preparation of the carbon dioxide generating agent of the present invention (hydrate of N-benzylcarbamic acid or a salt thereof, and/or benzylamine bicarbonate)

### (Example of experimental operation)

Under atmospheric atmosphere, at ambient temperature under normal pressure, benzylamine was added to a petri dish, and the dish was left standing for one week. Thereafter, the physical properties and component ratios of the compound (carbon dioxide generating agent) after carbon dioxide absorption were identified by elemental analysis. The results are shown in the following Table 1.

**[Table 1]**

| carbon dioxide absorbent | (CO₂)_{X}· (benzylamine) _{Y}· (H₂O)_{Z} (composition of carbon dioxide generating agent) | | | instrumental analysis data of carbon dioxide generating agent of the present invention |
|---|---|---|---|---|
| | X | Y | Z | |
| benzylamine | 4 | 8 | 1 | colorless powder; mp 57-65 °C; IR 3289, 3056, 3033, 2948, 2431, 2090, 1627, 1602, 1557, 1517, 1495, 1472, 1462, 1448, 1382, 1328, 1299, 1280, 1226, 1209, 1157, 1142, 1073, 1038, 1028, 997, 980, 930, 909, 894, 813, 790, 735, 693, 627, 603, 575, 476, 463, 423 cm⁻¹; Anal. Calcd for C₆₀H₇₄N₈O₉: C, 68.55; H, 7.10; N, 10.66. Found (1st): C, 68.60; H, 6.87; N, 10.67, (2nd): C, 68.24; H, 6.79; N, 10.61.. |

### [Example 1]

### Method of generating carbon dioxide by using the carbon dioxide generating agent of the present invention (hydrate of N-benzylcarbamic acid or a salt thereof, and/or benzylamine bicarbonate) (study of solvents)

### (Example of experimental operation)

The carbon dioxide generating agent (containing 755 mg, equivalent to 3 mmol of carbon dioxide) obtained in the above-mentioned Reference Example 1 was added to a reaction vessel, and while flowing nitrogen gas (250 mL/min) using a mass flow controller at ambient temperature under normal pressure, various solvents (water (H₂O), methanol (MeOH), ethanol (EtOH), N,N-dimethylformamide (DMF), acetone, tetrahydrofuran (THF), diethyl ether (Et₂O), dichloromethane (DCM) or toluene) (50 mL each) were added thereto, and the carbon dioxide concentration on the outlet side was measured over time using a carbon dioxide densitometer.

The results thereof are shown in Fig. 1.

According to Fig. 1, the release of carbon dioxide was confirmed when any of the solvents was added. It was found that carbon dioxide was released efficiently when dichloromethane or methanol was added.

### [Example 2]

### Method of generating carbon dioxide by adding dichloromethane (DCM) to the carbon dioxide generating agent of the present invention (hydrate of N-benzylcarbamic acid or a salt thereof, and/or benzylamine bicarbonate) (study of solvent amount)

### (Example of experimental operation)

The carbon dioxide generating agent (containing 755 mg, equivalent to 3 mmol of carbon dioxide) obtained in the above-mentioned Reference Example 1 was added to a reaction vessel, and while flowing nitrogen gas (250 mL/min) using a mass flow controller at ambient temperature under normal pressure, different volumes of dichloromethane (DCM) (1 mL, 3 mL, 5 mL, 10 mL, 30 mL, 50 mL or 100 mL) were added thereto, and the carbon dioxide concentration on the outlet side was measured over time using a carbon dioxide densitometer.

The results thereof are shown in Fig. 2.

According to Fig. 2, it was confirmed that the amount of carbon dioxide generated increased in a volume-dependent manner up to 50 mL of dichloromethane added; however, no significant increase in the amount of the generated carbon dioxide was observed even when higher volumes were added.

Calculating from the amount of carbon dioxide generated in the above-mentioned results, it was found that not less than 80% of the amount of carbon dioxide contained in the carbon dioxide generating agent was released when 50 mL of dichloromethane was added.

### [Example 3]

### (1) Absorption experiment 1 of carbon dioxide in the air by using various aralkylamines

A petri dish and a carbon dioxide densitometer were set in a 35.7 L desiccator, aralkylamine (5 mmol) represented by the following formula: 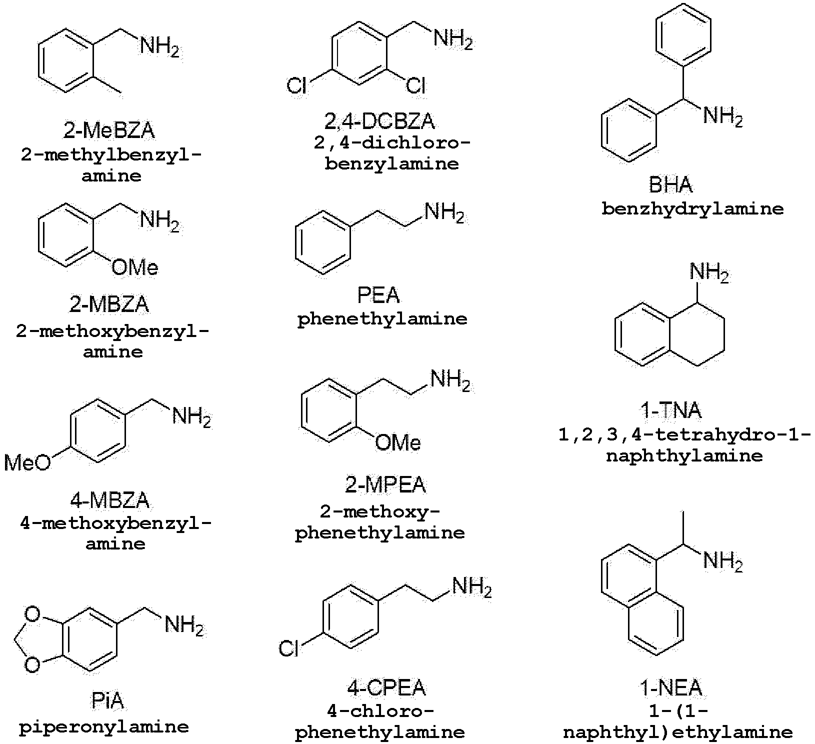 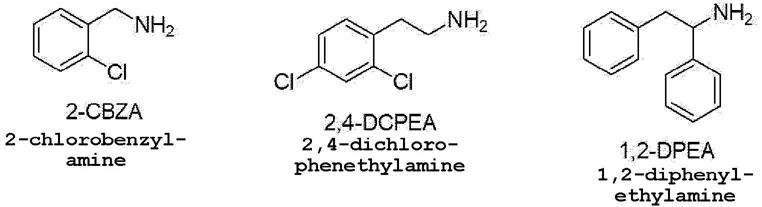 was added to the petri dish, the door was closed, and the carbon dioxide concentration in the desiccator was measured over time. The initial carbon dioxide concentration was set to about 600 to 700 ppm. The results are shown in Fig. 3.

According to Fig. 3, it was confirmed that all aralkylamines except 1,2-diphenylethylamine absorb carbon dioxide efficiently. It was also confirmed that 1,2-diphenylethylamine absorbs carbon dioxide, though gradually.

### (2) Absorption experiment 2 of carbon dioxide in the air by using various aralkylamines

Aralkylamine was placed on a petri dish at room temperature in the air and left standing for one week. Thereafter, the obtained components were subjected to elemental analysis, and the molar ratio of the amine, absorbed carbon dioxide, and water was calculated.

The results thereof are shown in Table 2.

**[Table 2]**

| amine | elemental analysis | | | | | | | | molar ratio | | |
|---|---|---|---|---|---|---|---|---|---|---|---|
| | Calculated (%) | | | | | Found (%) | | | amine | CO₂ | H₂O |
| | C | H | N | O | Cl or F | C | H | N | | | |
| 2-methylbenzylamine (2-MeBZA) | 71.10 | 7.89 | 9.81 | 11.20 | - | 71.50 | 7.83 | 9.71 | 11 | 5 | 1 |
| 2-methoxybenzylamine (2-MBZA) | 62.28 | 7.34 | 8.65 | 21.73 | - | 62.30 | 7.49 | 7.22 | 2 | 1 | 0 |
| 4-methoxybenzylamine (4-MBZA) | 63.89 | 7.13 | 8.82 | 20.16 | - | 64.06 | 6.97 | 8.75 | 9 | 4 | 1 |
| piperonylamine (PiA) | 58.96 | 5.24 | 8.09 | 27.72 | - | 58.96 | 5.25 | 8.08 | 2 | 1 | 0 |
| 2-chlorobenzylamine (2-CBZA) | 55.06 | 4.93 | 8.56 | 9.78 | 21.67 | 55.07 | 4.81 | 8.46 | 2 | 1 | 0 |
| 2,4-dichlorobenzylamine (2,4-DCBZA) | 45.49 | 3.56 | 7.07 | 8.08 | 35.80 | 45.50 | 3.53 | 7.03 | 2 | 1 | 0 |
| phenethylamine (PEA) | 71.05 | 7.92 | 9.81 | 11.21 | - | 70.87 | 7.95 | 9.72 | 9 | 4 | 1 |
| 2-methoxyphenethylamine (2-MPEA) | 64.75 | 7.63 | 7.95 | 19.67 | - | 65.11 | 7.63 | 8.01 | 6 | 3 | 1 |
| 4-chlorophenethylamine (4-CPEA) | 57.48 | 5.67 | 7.89 | 9.01 | 19.96 | 57.42 | 5.63 | 7.80 | 2 | 1 | 0 |
| 2,4-dichlorophenethylamine (2,4-DCPEA) | 47.29 | 4.51 | 6.54 | 8.54 | 33.12 | 47.36 | 4.28 | 6.57 | 7 | 3 | 2 |
| benzhydrylamine (BHA) | 79.31 | 6.71 | 6.94 | 7.04 | - | 79.69 | 6.51 | 6.76 | 9 | 3 | 2 |
| 1,2,3,4-tetrahydro-1-naphthylamine (1-TNA) | 74.53 | 7.74 | 8.28 | 9.45 | - | 74.32 | 7.72 | 8.26 | 2 | 1 | 0 |
| 1-(1-naphthyl)ethylamine (1-NEA) | 77.69 | 6.78 | 7.25 | 8.28 | - | 77.93 | 6.75 | 7.16 | 2 | 1 | 0 |
| 1,2-diphenylethylamine (1,2-DPEA) | 80.49 | 7.04 | 6.52 | 5.96 | - | 80.62 | 6.97 | 6.30 | 5 | 2 | 0 |
| 4-trifluoromethylbenzylamine (4-TBZA) | 51.20 | 4.17 | 7.02 | 9.03 | 28.58 | 51.11 | 4.11 | 6.99 | 8 | 4 | 1 |

According to Table 2, it was confirmed that, regardless of which aralkylamine was used, carbon dioxide was absorbed and the corresponding N-aralkylcarbamic acid or a salt thereof, and/or aralkylamine bicarbonate or a hydrate thereof (carbon dioxide generating agent) was produced.

### (3) Method of generating carbon dioxide by using the carbon dioxide generating agent of the present invention (N-aralkylcarbamic acid or a salt thereof, and/or aralkylamine bicarbonate or a hydrate thereof) derived from various aralkylamines

### (Example of experimental operation)

The carbon dioxide generating agent (2.0 mmol) obtained in the aforementioned (2) was added to a reaction vessel, nitrogen gas was flown (250 mL/min) by a mass flow controller, dichloromethane (35 mL) was poured thereinto, and the carbon dioxide concentration on the outlet side was measured over time. The results are shown in Fig. 4.

According to Fig. 4, it was confirmed that, regardless of which aralkylamine-derived carbon dioxide generating agent was used, the absorbed carbon dioxide was efficiently released within two hours by adding dichloromethane.

### [Industrial Applicability]

According to the present invention, a convenient method for efficiently releasing carbon dioxide at ambient temperature under normal pressure can be provided, which only includes adding a solvent to a carbon dioxide generating agent containing an amine that has absorbed and fixed carbon dioxide, particularly an optionally substituted N-C₇₋₁₄ aralkylcarbamic acid or a salt thereof, and/or an optionally substituted C₇₋₁₄ aralkylamine bicarbonate, or a hydrate thereof, without performing any physicochemical treatments such as pressure, heating, electric power, light irradiation, and the like. Since the present invention does not use an external energy (heating, pressurization, voltage application, light irradiation, stirring, etc.) at all, it is a novel, environmentally friendly method for generating carbon dioxide that can reduce separation energy to substantially zero.

This application is based on a patent application No. 2022-020715 filed in Japan (filing date: February 14, 2022), the contents of which are incorporated in full herein.

## Claims

1. A method for generating carbon dioxide at ambient temperature under normal pressure, comprising adding a solvent to a carbon dioxide generating agent comprising an optionally substituted N-C₇₋₁₄ aralkylcarbamic acid or a salt thereof, and/or an optionally substituted C₇₋₁₄ aralkylamine bicarbonate, or a hydrate thereof.

2. The method according to claim 1, wherein the solvent is selected from the group consisting of water, halogenated hydrocarbons, alcohols, amides, ketones, ethers, aromatic hydrocarbons, and mixed solvents thereof.

3. The method according to claim 1, wherein the solvent is halogenated hydrocarbon or alcohol.

4. The method according to any one of claims 1 to 3, wherein an amount of the solvent to be added is 0.1 mL to 50 L per 1 mol of the optionally substituted N-C₇₋₁₄ aralkylcarbamic acid or a salt thereof, and/or the optionally substituted C₇₋₁₄ aralkylamine bicarbonate, or a hydrate thereof.

5. The method according to any one of claims 1 to 4, wherein the carbon dioxide generating agent comprises a N-C₇₋₁₄ aralkylcarbamic acid or a salt thereof, and/or a C₇₋₁₄ aralkylamine bicarbonate, or a hydrate thereof, each of which is optionally substituted by a substituent(s) selected from the group consisting of a halogen atom, a nitro group, a cyano group, a C₁₋₄ alkyl group, a C₁₋₄ alkoxy group, a halo C₁₋₄ alkyl group, a halo C₁₋₄ alkoxy group, a C₁₋₄ alkylenedioxy group, a C₆₋₁₀ aryl group, a C₇₋₁₄ aralkyl group, and an aminomethyl group.

6. The method according to claim 5, wherein the N-C₇₋₁₄ aralkylcarbamic acid or a salt thereof, and/or the C₇₋₁₄ aralkylamine bicarbonate, or a hydrate thereof are/is a N-aralkylcarbamic acid or a salt thereof, and/or an aralkylamine bicarbonate, or a hydrate thereof derived from an aralkylamine selected from the group consisting of benzylamine, 2-methylbenzylamine, 2-methoxybenzylamine, 4-methoxybenzylamine, piperonylamine, 2-chlorobenzylamine, 2,4-dichlorobenzylamine, 4-trifluoromethylbenzylamine, phenethylamine, 2-methoxyphenethylamine, 4-chlorophenethylamine, 2,4-dichlorophenethylamine, benzhydrylamine, 1,2,3,4-tetrahydro-1-naphthylamine, 1-(1-naphthyl)ethylamine, and 1,2-diphenylethylamine.

7. The method according to any one of claims 1 to 4, wherein the carbon dioxide generating agent comprises a benzylcarbamic acid or a salt thereof, and/or a benzylamine bicarbonate, or a hydrate thereof, each of which is optionally substituted by a substituent(s) selected from the group consisting of a halogen atom, a C₁₋₄ alkyl group, a C₁₋₄ alkoxy group, a halo C₁₋₄ alkyl group, and a halo C₁₋₄ alkoxy group.
